# FASCICULE DE BREVET EUROPEEN

(11) **EP 4 114 632 B1**
(45) Date de publication et mention de la délivrance du brevet: **24.09.2025**
(21) Numéro de dépôt: 21714642.2
(22) Date de dépôt: 02.03.2021
(51) Int. Cl.: B29B 17/02, B29B 17/04, B29K 27/00, B29K 27/18, B29K 67/00, B29L 31/14

(54) **PROCÉDÉ DE SÉPARATION DE MATÉRIAUX POLYMÈRES**
VERFAHREN ZUR TRENNUNG VON POLYMERISCHEN MATERIALIEN
METHOD FOR SEPARATING POLYMERIC MATERIALS

(30) Priorité: 02.03.2020 FR 2002091
(43) Date de publication de la demande: 11.01.2023
(73) Titulaire: Suez International, 92800 Puteaux (FR)
(72) Inventeur: SCHNITZLER, Jean-Luc, 78980 Bréval (FR); RAVEREAU, Jennifer, 78500 Sartrouville (FR)
(74) Mandataire: Fédit-Loriot
(86) Numéro de dépôt international: PCT/FR2021/050351
(87) Numéro de publication internationale: WO 2021/176175

(56) Documents cités:
- EP-A1- 0 044 507
- CN-A- 103 752 190
- CN-A- 109 012 227
- CN-B- 101 422 708
- JP-A- 2006 231 847

## Description

La présente invention se rapporte à un procédé de séparation de matériaux polymères d'éléments d'un assemblage.

Le domaine d'application envisagé est celui du recyclage des modules de filtration liquide. Ceux-ci comprennent chacun, une ossature réalisée dans des premiers matériaux polymères et une membrane filtrante réalisée dans un second matériau polymère présentant une structure poreuse.

La filtration des eaux fait appel à des techniques et à des matériaux permettant de les mettre en œuvre. Ces techniques consistent essentiellement à filtrer ces eaux au moyen de membrane poreuse dont la taille des pores est fonction de l'application et des objectifs de traitement ou de performances à atteindre. Il en va en effet différemment du dessalement de l'eau, du traitement des eaux usées ou du traitement de l'eau potable. La taille des pores est par exemple de l'ordre de 20 nm. Elles autorisent ainsi le passage des molécules d'eau et retiennent les particules, chimiques ou biologiques en suspension de taille supérieure à la taille des pores, tels les virus et les bactéries par exemple. Ces membranes poreuses peuvent présenter des structures et morphologies variées. De manière générale, on distingue les membranes tubulaires des membranes planes.

Ces membranes sont réalisées dans un matériau polymère technique à haute valeur ajoutée, par exemple le Poly(fluorure de vinylidène) ou PVDF. Il existe également des membranes en Polyéthersulfone (PES), en PTFE ou bien en Polypropylène (PP). Le PVDF présente l'avantage de résister à une large gamme de composés chimiques et c'est une des raisons pour laquelle il est prisé pour son utilisation en tant que filtre.

Lorsque les membranes se présentent sous la forme de fibres tubulaires, la paroi est poreuse et l'intérieur est libre. L'eau est ainsi filtrée, soit de l'extérieur vers l'intérieur, soit de l'intérieur vers l'extérieur, selon la configuration de la membrane. Les membranes tubulaires peuvent également revêtir des fils de fibres tressées en PET par exemple, lesquels forment alors support.

Ces membranes associées aux autres éléments d'ossature, constituent ainsi des modules de filtration qui, assemblés, permettent de réaliser des installations de traitement d'eau.

Lorsque ces modules de filtration cessent d'être efficaces, ils sont inter-changés, et les modules en fin de vie sont alors, soit incinérés, ce qui, dans le cas de modules comprenant des polymères fluorés, tel le PVDF, dégage de l'acide fluorhydrique, soit enfouis.

Ainsi, d'une part on dissémine dans la nature des composés plus ou moins dangereux, et d'autre part, on se prive de composés polymères à relativement haute valeur ajoutée, notamment le Poly(fluorure de vinylidène), dont les coûts d'obtention sont relativement élevés. Il a été envisagé dans le document CN103752190 de dissoudre le PVDF pour pouvoir le récupérer. D'autres procédés de séparation de matériaux polymères de modules de filtration sont connus de CN101422708, CN109012227 ou JP2006231847.

Ainsi, un problème qui se pose et que vise à résoudre la présente invention est de fournir un procédé bon marché qui permette de récupérer les matériaux polymères à haute valeur ajoutée de ces modules de filtration.

Dans le but de résoudre ce problème, il est proposé un procédé de séparation de matériaux polymères, caractérisé en ce qu'il comprend les étapes suivantes : a) on fournit une pluralité de modules de filtration comprenant chacun, une ossature réalisée dans des premiers matériaux polymères et une membrane filtrante réalisée dans un second matériau polymère présentant une structure poreuse ; b) on déchiquète ladite pluralité de modules de filtration pour obtenir un mélange de particules de matériaux polymères présentant une granulométrie prédéfinie ; c) on provoque l'écoulement gravitaire du mélange de particules de matériaux polymères entre une zone amont et une zone aval, tandis qu'on provoque l'écoulement d'un fluide gazeux à contre-courant dudit écoulement gravitaire, pour pouvoir entraîner les seules particules dudit second matériau polymère vers ladite zone amont ; et, d) on récupère les particules dudit second matériau polymère dans une zone de récupération située vers ladite zone amont.

Ainsi, une caractéristique de l'invention réside, d'une part dans le déchiquetage des modules de filtration, qui permet alors de réduire les polymères des différents éléments du module de filtration en particules, et aussi de détacher du second matériau polymère des premiers matériaux polymères, et d'autre part dans la séparation du second matériau polymère, de structure poreuse, des premiers matériaux polymères grâce à la mise en œuvre d'une séparation aéraulique. Plus précisément, l'écoulement gravitaire du mélange de particules concoure à l'écoulement, de la zone amont vers la zone aval des particules des premiers matériaux polymères, dont la masse volumique apparente est généralement bien supérieure à la masse volumique apparente des particules dudit second matériau polymère, tandis que l'écoulement gazeux provoque l'entraînement à contre-sens des particules du second matériau polymère qui remontent ainsi vers la zone amont.

De la sorte, en procédant au déchiquetage des modules, puis à une séparation aéraulique, on récupère à un coût avantageux, le second matériau polymère. On s'affranchit ainsi, de phases de démontage des modules et de séparation des différents matériaux polymères, lesquelles sont généralement longues et peu automatisables. Plus généralement, le procédé selon l'invention est applicable à tout système comprenant des premiers matériaux polymères d'une première masse volumique apparente M1 et un second matériau polymère d'une seconde masse volumique apparente M2 inférieure à M1, et dont on souhaite valoriser les premiers et second matériaux polymères. De préférence, la seconde masse volumique apparente M2 est supérieure à **trois** fois la première masse volumique apparente M1. Cela est notamment le cas lorsque le second matériau polymère présent une structure poreuse.

Préférentiellement, la seconde masse volumique apparente M2 est inférieure à 25 fois la première masse volumique apparente M1. Par exemple, le rapport des masses volumiques est compris entre 5 et 10.

Les masses volumiques apparentes sont évaluées ici selon la norme européenne NF EN ISO 60 : 1999, que l'on décrira brièvement dans la description détaillée.

On observera que le procédé selon l'invention peut également être mis en œuvre pour les modules de filtration qui ne seraient pas nécessairement en fin de vie, mais qui sont défectueux, par exemple parce qu'ils présenteraient des défauts de fabrication.

Avantageusement, à l'étape b), les particules du second matériau polymère présentent une masse volumique apparente inférieure à 0,4 g/cm³. Cette valeur de masse volumique est due essentiellement à la nature poreuse du second matériau. Préférentiellement, la masse volumique apparente est supérieure à 0,05 g/cm³.

Préférentiellement, à l'étape b), les particules des premiers matériaux polymères présentent une masse volumique apparente supérieure à 0,6 g/cm³.

Aussi, il convient de préciser ici, que la masse volumique apparente, soit une grandeur adaptée à mesurer la masse de matériau contenue dans un volume donné, est particulièrement adaptée aux matériaux pulvérulents résultant ici du déchiquetage des matériaux polymères. Aussi, la masse volumique apparente d'un matériau polymère est inférieure à la masse volumique du même matériau en masse non déchiqueté. Et la masse volumique des matériaux polymères est usuellement comprise entre un gramme par centimètre cube et deux gramme par centimètre cube. Partant, les particules des premiers matériaux polymères présentent une masse volumique apparente préférentiellement inférieure à 2 g/cm³.

Préférentiellement, on guide l'écoulement gravitaire dudit mélange de particules de matériaux polymères selon un chemin sinueux entre ladite zone amont et ladite zone aval. De la sorte, durant l'écoulement gravitaire, les particules du mélange subissent alternativement des accélérations transversales, tandis que l'écoulement gazeux vient croiser l'écoulement gravitaire à chaque changement de direction, ce qui favorisent la séparation du second matériau polymère des premiers et partant, sa remontée à contre-courant sous l'effet du fluide gazeux.

Plus précisément, le fluide gazeux est avantageusement de l'air. Il est éventuellement séché lorsque les conditions de séparation le requièrent.

Selon un mode de mise en œuvre de l'invention particulièrement avantageux, à l'étape c), on injecte ledit fluide gazeux dans ladite zone aval vers ladite zone amont pour provoquer l'écoulement du fluide gazeux à contre-courant dudit écoulement gravitaire. Ainsi, on obtient une meilleure efficacité de l'écoulement du fluide gazeux qui s'étend sur toute la longueur de l'écoulement gravitaire. Les surfaces d'échange entre le fluide gazeux et l'écoulement gravitaire sont en effet maximisées, et la séparation du second matériau polymère des premiers polymères est alors optimale.

Préférentiellement, à l'étape b), la valeur maximale des dimensions des particules dudit mélange est inférieure à 40 mm. Cette valeur maximale est en accord avec la granulométrie prédéfinie que l'on détaillera dans la suite de la description. Avantageusement, les dimensions des particules dudit mélange sont supérieures à 500 µm. Par exemple, elles sont comprises entre 1 mm et 35 mm.

En outre, la granulométrie est ici mesurée au moyen de tamis de contrôle selon la norme DIN 53 477 : 2018-09 ; laquelle norme vient notamment préciser les dimensions nominales des tissus métalliques mis en œuvre.

Selon une variante d'exécution de l'invention, à l'étape b), on provoque l'abaissement de la température des matériaux polymère. Ainsi, durant le déchiquetage on s'affranchit des risques d'échauffement et par conséquent de fusion des polymères. Selon un mode de mise en œuvre particulièrement avantageux, mais nullement limitatif, on provoque l'abaissement de la température des matériaux polymère en injectant de l'air refroidi. De surcroît, lorsque la température des polymères est abaissée en dessous de la température de transition vitreuse de ces polymères, ceux-ci deviennent plus rigides et cassants, ce qui favorise leur détachement les uns des autres.

Par exemple, on injecte avantageusement de l'azote liquide sur lesdits matériaux polymères pour abaisser leur température. Ainsi, on asperge d'azote liquide les polymères durant leur déchiquetage, laquelle azote liquide est à une température de - 195°C, ce qui abaisse leur température jusqu'à cœur.

Selon un autre exemple, on met en œuvre de la glace carbonique pour pouvoir abaisser la température des matériaux polymères.

Selon un mode de réalisation, à l'étape a) ledit second matériau polymère de la membrane filtrante est le Poly(fluorure de vinylidène), ou PVDF. Ce matériau polymère se détache parfaitement des autres polymères lorsqu'il est refroidi, et de surcroit, il est plus aisément réduit en particules volatiles durant le déchiquetage.

On observera, que le déchiquetage est néanmoins tout à fait efficient en absence de refroidissement.

Selon un autre mode de mise en œuvre, à l'étape a) ledit second matériau polymère de la membrane filtrante est le Polyethersulfone ou le Polypropylène (PP).

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1A] est une vue schématique montrant une installation de séparation de matériaux polymères permettant de mettre en œuvre le procédé selon l'invention ;
[Fig. 1B] est une vue schématique montrant un élément de l'installation de séparation représentée sur la figure [Fig. 1A] selon une autre variante d'exécution ; et,
[Fig. 2] est un organigramme illustrant les étapes du procédé selon l'invention.

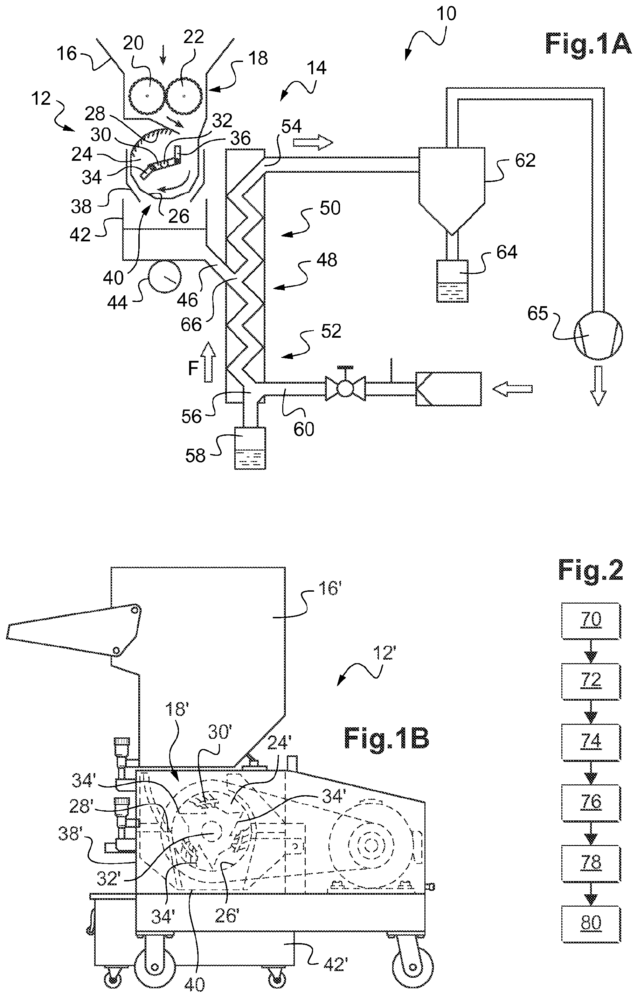

La figure [Fig. 1A] illustre schématiquement une installation de séparation 10 de matériaux polymères. Elle comprend des organes de broyage et de déchiquetage 12 reliés à un séparateur aéraulique 14.

L'installation 10 est adaptée au traitement des modules de filtration utilisés dans différents domaines d'application et plus particulièrement dans la filtration des eaux. Les types de module concernés peuvent être mis en œuvre dans des procédés de microfiltration, d'ultrafiltration, de nanofiltration ou encore d'osmose inverse. Il s'agit ici de traiter les modules de filtration en fin de vie. Mais rien n'exclut le traitement des modules de filtration non conformes ou au rebut.

Ainsi, ces modules de filtration comportent différents éléments réalisés dans des polymères techniques à plus ou moins haute valeur ajoutée. La membrane en particulier est réalisée dans des polymères techniques à haute valeur ajoutée, et par exemple le Poly(fluorure de vinylidène), ou poly(1,1-difluoroéthylène) selon la nomenclature de l'UICPA, mais couramment dénommé PVDF sous son code ISO. On observera que ce matériau polymère est semi-cristallin, et qu'il présente une température de transition vitreuse de - 40° C.

Les autres éléments des modules de filtration sont notamment réalisés dans des matériaux polymères tels que, le poly(téréphtalate d'éthylène), le poly(chlorure de vinyle) ou encore l'acrylonitrile butadiène styrène.

La membrane est poreuse et la taille des pores est adaptée au procédé de filtration mis en œuvre. Néanmoins, la structure poreuse du polymère lui confère une masse volumique apparente bien plus faible que celle des autres polymères du module, et partant, permet de l'en séparer par voie aéraulique comme on va l'expliquer plus en détail ci-après.

Tout d'abord, les organes de broyage et de déchiquetage 12, selon un premier mode de mise en œuvre particulier, comprennent une trémie 16 apte à accueillir les modules de filtration. La trémie 16 présente un fond 18 dans lequel sont installés deux rouleaux concasseurs, un premier 20 et un second 22, permettant de démembrer les modules de filtration. Ces rouleaux concasseurs 20, 22 sont représentés sur la figure [Fig. 1A] en coupe droite.

Le fond de la trémie 18 débouche tangentiellement dans un tambour 24 délimité dans sa partie inférieure par une grille de calibrage 26 de symétrie cylindrique, et dans sa partie supérieure par une contre paroi cylindrique 28. La grille de calibrage 26 présente des mailles calibrées qui permettent d'autoriser le passage de particules ayant atteint une taille donnée inférieure à une valeur limite.

A l'intérieur du tambour 24, un porte-couteaux 30 est monté rotatif autour d'un axe d'entraînement 32 sensiblement coaxial au tambour 24. Le porte-couteaux 30 est muni de couteaux opposés 34, 36 montés libres en pivotement.

En outre, les organes de broyage 12 comportent un carter 38 formant cage autour du tambour 24, et le carter 38 présente une ouverture inférieure 40 s'étendant en regard de la grille 26 et débouchant au dessus d'un bac de réception 42. Aussi, le bac de réception 42 présente un fond vibrant 44 pour faciliter l'écoulement de son contenant à travers une goulotte de sortie 46.

S'agissant du séparateur aéraulique 14, il comporte un canal vertical en zigzag 48 présentant une zone amont 50 opposée à une zone aval 52. Celles-ci sont respectivement prolongées par deux extrémités opposées ouvertes, une extrémité supérieure 54 et une extrémité inférieure 56.

L'extrémité inférieure 56 se prolonge verticalement, par un premier réceptacle 58, tandis qu'elle reçoit latéralement un conduit d'injection d'air 60. Ce dernier est par exemple précédé d'un ventilateur de soufflage, lequel permet de provoquer un écoulement d'air ascendant continu à l'intérieur du canal vertical en zigzag 48, de la zone aval 52 vers la zone amont 50.

Quant à l'extrémité supérieure 54, elle se prolonge pour rejoindre un cyclone 62, lequel se déverse dans un second réceptacle 64. En outre, une chaussette de détente 65 est raccordée au cyclone 62.

Aussi, le canal vertical en zigzag 48 est fait de tronçons alternativement inclinés les uns des autres d'un même angle, compris par exemple entre 90° et 130°, en formant un coude entre deux tronçons successifs. Et la goulotte de sortie 46 du bac de réception 42 est raccordé au canal vertical en zigzag 48, au niveau d'un coude intermédiaire 66, situé entre l'extrémité supérieure 54 et l'extrémité inférieure 56. La goulotte de sortie 46 est inclinée vers le coude intermédiaire 66, et il s'étend dans la direction du tronçon aval du coude intermédiaire 66.

On observera tout d'abord que les organes de broyage et de déchiquetage 12 et le séparateur aéraulique 14 ne sont pas nécessairement directement reliés ensemble. Pour des raisons évidentes de différence de débit, il peut être avantageux de procéder tout d'abord au déchiquetage des modules de filtration ; puis ensuite, de déverser les polymères déchiquetés dans le canal vertical en zigzag 48.

Aussi, on décrira en référence à la figure [Fig. 1B], un autre type d'organes de broyage et de déchiquetage 12'. Les éléments de cet autre type remplissant les mêmes fonctions que celles de ceux illustrés sur la figure [Fig. 1A] présenteront la même référence affectée du signe prime : «'».

Les organes de broyage et de déchiquetage 12' comprennent une trémie 16' adapté à accueillir les modules de filtration. La trémie 16' présente un fond ouvert 18' débouchant directement dans un tambour 24'. Ce dernier est délimité dans sa partie inférieure par une grille de calibrage 26' de symétrie cylindrique.

A l'intérieur du tambour 24', un porte-couteaux 30', ou rotor, est monté rotatif autour d'un axe d'entraînement 32' coaxial au tambour 24'. Le porte-couteaux 30' est muni de couteaux 34' inclinés sensiblement à 45° par rapport à un plan radial du porte-couteaux 30'. Les organes de broyage 12' comportent un carter 38' formant cage autour du tambour 24', et le carter 38' présente une ouverture inférieure 40' s'étendant en regard de la grille 26' et débouchant au dessus d'un bac de réception 42'. En outre, les organes de broyage et de déchiquetage 12' comprennent des contre-couteaux 28' montés en position fixe à l'intérieur du carter 38' et que viennent croiser les couteaux 34' lorsque le porte-couteaux 30' est entraîné en rotation.

L'installation de séparation 10 décrite en regard de la figure [Fig. 1A] est mise en œuvre conformément à l'organigramme représenté sur la figure [Fig. 2], auquel on se référera en complément de la figure [Fig. 1A].

Ainsi, dans une première étape de démembrement 70, les modules de filtration du type précité sont introduits dans la trémie 16 et ils sont alors démembrés entre les deux rouleaux concasseurs 20, 22, tournant en sens inverse. Tels que présentés sur la figure [Fig. 1A], le premier 20 est entraîné en rotation dans le sens horaire, tandis que le second l'est dans le sens trigonométrique. Ce démembrement permet essentiellement de briser l'ossature des modules et de séparer ses différents éléments.

Les modules de filtration démembrés s'acheminent alors à l'intérieur du tambour 24 où a lieu le broyage proprement dit, conformément à une étape de broyage 72. Le porte-couteaux 30 est entraîné en rotation à grande vitesse et les couteaux 34 viennent briser les modules démembrés contre la contre paroi cylindrique 28. De la sorte, les différents éléments des modules sont broyés ensemble et le matériau polymère des membranes est à la fois détaché des autres éléments qui le supportent et aussi broyé.

Selon une variante de réalisation particulièrement avantageuse, les modules démembrés sont aspergés d'azote liquide dans le tambour 24. L'azote liquide est à une température de - 195,79 °C, et de la sorte, la température des polymères des modules démembrés est grandement abaissée par rapport à la température ambiante à laquelle ils se trouvent. De la sorte, on évite que certains matériaux polymères dont la zone de fusion est relativement basse, ne fondent durant le déchiquetage, et ne viennent perturber le broyage. Mais au surplus, la température de certains parmi ces polymères est abaissée en dessous de leur température de transition vitreuse. C'est en particulier le cas du PVDF. Et lorsque la température de ce polymère est inférieure à sa température de transition vitreuse, comme de nombreux polymères semi-cristallins, il devient plus fragile et cassant. Partant, le détachement de ce matériau polymère vis-à-vis des autres matériaux polymères est plus efficient durant le broyage.

Grâce à la grille de calibrage 26, dans une étape de calibrage 74, les particules de matériaux polymères dont la taille est inférieure à la dimension des mailles de la grille 26, la traverse, et se déverse dans le bac de réception 42. On obtient de la sorte dans le bac de réception 42, un broyat ou un mélange de particules de matériaux polymères déchiquetés, d'une granulométrie définie par la grille de calibrage 26.

Comme indiqué ci-dessus, les particules du matériau polymère des membranes, présentent une masse volumique apparente bien plus faible que celles des autres matériaux polymères du broyat, compte tenu de la structure poreuse du matériau.

Ensuite, selon une étape de chargement 76, le broyat est entraîné à travers la goulotte de sortie 46, notamment grâce au fond vibrant 44 du bac de réception 42, et il se déverse alors dans le canal vertical en zigzag 48, au niveau du coude intermédiaire 66.

On décrira ci-après une autre variante d'exécution, du procédé selon invention, dans laquelle on met en œuvre les organes de broyage de déchiquetage 12' tels qu'illustrés sur la figure [Fig. 1B]. On observera que le traitement des modules s'apparente essentiellement à un déchiquetage et que l'on s'affranchit d'une étape de démembrement. En effet, les modules de filtration introduits dans la trémie 16' s'acheminent indirectement dans le fond ouvert 18'. Ils sont alors happés par les couteaux 34' du rotor 30', lequel, tel que représenté sur la figure [Fig. 1B], est entraîné en rotation dans le sens trigonométrique. Les couteaux 34' viennent ainsi déchiqueter les modules de filtration en croisant les contre-couteaux 28'.

On observera que les modules de filtration sont alors à la fois brisés et déchiquetés par le seul rotor 30'. Aussi, les différents éléments des modules sont déchiquetés ensemble et le matériau polymère des membranes est à la fois séparé des autres éléments et déchiqueté lui aussi.

Les particules de matériau polymère traversent la grille de calibrage 26' et s'achemine dans le bac de réception 42'. Le mélange de particules matériaux polymères présente une granulométrie maximale définie par la grille de calibrage 26'.

On provoque ainsi la chute des particules de matériaux polymères du broyat ou du mélange récupérer dans le bac de réception 42', dans le canal vertical en zigzag 48, selon une étape d'écoulement gravitaire 78. Le mélange des particules de matériau polymère peut être acheminé dans le canal vertical au moyen d'un convoyeur.

Simultanément, grâce au conduit d'injection d'air 60, on injecte de l'air à contre-courant, de la zone aval 52 vers la zone amont 50 selon la flèche F et avec un débit prédéterminé en fonction de l'installation.

Ainsi, le débit d'air est précisément déterminé de manière à ce que les particules des matériaux polymères, autres que celles du matériau polymère des membranes, s'acheminent vers la zone aval 52 sous l'effet de leur propre poids, et à ce qu'à l'inverse, les particules du matériau polymère des membranes, elles, s'élèvent vers la zone amont 50.

On observera que la masse volumique apparente du matériau polymère des membranes, évaluée selon la norme européenne NF EN ISO 60 : 1999, est bien inférieure à celle des matériaux polymères des autres éléments des modules de filtration.

Selon la norme précitée, la masse volumique d'un matériau pulvérulent est mesurée en remplissant un réceptacle cylindrique calibré de 100 ml au moyen d'un entonnoir lui-même calibré et ajusté au-dessus du cylindre. Le sommet du réceptacle cylindrique est ensuite arasé, et la masse en grammes du matériau pulvérulent contenu dans le réceptacle divisée par 100, fournit la masse volumique apparente en grammes par millilitre. En l'espèce, la masse volumique des particules du matériau polymère des membranes est inférieure à 0,3 gramme par millilitre, tandis que la masse volumique des autres particules de matériau polymère du module est supérieur à 0,6 gramme par millilitre.

Outre la masse volumique, les caractéristiques liées à la forme des particules et à leur granulométrie ont également un impact sur la qualité de la séparation. Partant, la grille de calibrage 26 est choisie de façon que ses mailles puissent autoriser le passage de particules n'excédant pas 40 mm par exemple. Selon une mode de mise en œuvre particulier, les mailles de la grille présentent une largeur de 15 mm.

Plus précisément, à chaque coude du canal vertical en zigzag 48, entre le coude intermédiaire 66 et l'extrémité inférieure 56, le broyat s'écoulant le long d'une paroi d'un tronçon amont du canal, traverse l'écoulement d'air et vient ensuite s'écouler le long de la paroi opposée du tronçon aval. Ainsi, à chaque coude, l'écoulement d'air ascensionnel, en traversant l'écoulement du broyat, entraîne par là même, les particules du matériau polymère des membranes, dont la masse volumique apparente est bien plus faible que celle des autres matériaux polymères.

La succession de coudes du canal 48, permet de multiplier les phases de séparation, et ainsi, d'obtenir une séparation complète des particules du matériau polymère des membranes, lorsque les particules des autres matériaux polymères atteignent l'extrémité inférieure 56.

Ainsi, l'écoulement d'air se charge progressivement en particules du matériau polymère des membranes et les entraîne dans le canal vertical en zigzag 48, au-delà du coude intermédiaire 66, vers l'extrémité supérieure 54, où elles sont ensuite entraînées, selon une étape de récupération 80 dans le second réceptacle 64, par l'intermédiaire du cyclone 62.

Simultanément, les particules des autres matériaux polymères sont récupérées dans le premier réceptacle 58.

On observera, que les étapes détaillées de l'organigramme de la figure [Fig. 2] servent essentiellement à illustrer le procédé selon l'invention. Car en effet, dans un processus continu de traitement, les différentes étapes ont cours simultanément.

Ainsi, à partir d'un stock de modules de filtration comprenant des membranes en PVDF, on en dépose un poids total de 320 kg dans la trémie 16 des organes de broyage 12. Et on récupère alors 129 kg de matériau polymère de membrane dans le second réceptacle 64, et 180 kg des autres matériaux polymères des autres éléments des modules. Aussi, les 11 kg restant, sont essentiellement du sable et de la terre, ainsi que l'eau dont les modules sont inévitablement imprégnés.

La masse volumique apparente du PVDF mesurée selon la norme précitée, est alors de 0,12 gramme par millilitre, tandis que la masse volumique apparente des autres matériaux polymères est de 0,70 gramme par millilitre.

Partant, les 129 kg de PVDF peuvent par exemple être recyclés et être utilisés pour réaliser d'autres types de produits, par exemple des tubes.

## Revendications

1. Procédé de séparation de matériaux polymères comprenant les étapes suivantes :
a) on fournit une pluralité de modules de filtration liquide comprenant chacun, une ossature réalisée dans des premiers matériaux polymères et une membrane filtrante réalisée dans un second matériau polymère présentant une structure poreuse ;
b) on déchiquète ladite pluralité de modules de filtration liquide pour obtenir un mélange de particules de matériaux polymères présentant une granulométrie prédéfinie ;
**caractérisé en ce qu'**il comprend en outre les étapes suivantes :
c) on provoque l'écoulement gravitaire du mélange de particules de matériaux polymères entre une zone amont (50) et une zone aval (52), tandis qu'on provoque l'écoulement d'un fluide gazeux à contre-courant dudit écoulement gravitaire, pour pouvoir entraîner les seules particules dudit second matériau polymère vers ladite zone amont (50) ; et,
d) on récupère les particules dudit second matériau polymère dans une zone de récupération située vers ladite zone amont (50).

2. Procédé de séparation selon la revendication 1, **caractérisé en ce qu'**à l'étape b), les particules du second matériau polymère présentent une masse volumique apparente inférieure à 0,4 g/cm³.

3. Procédé de séparation selon la revendication 1, **caractérisé en ce qu'**à l'étape b), les particules des premiers matériaux polymères présentent une masse volumique apparente supérieur à 0,6 g/cm³.

4. Procédé de séparation selon l'une quelconque des revendications 1 à 3, **caractérisé en ce qu'**à l'étape c), on guide l'écoulement gravitaire dudit mélange de particules de matériaux polymères selon un chemin sinueux entre ladite zone amont (50) et ladite zone aval (52).

5. Procédé de séparation selon l'une quelconque des revendications 1 à 4, **caractérisé en ce qu'**à l'étape c), le fluide gazeux est de l'air.

6. Procédé de séparation selon l'une quelconque des revendications 1 à 5, **caractérisé en ce qu'**à l'étape c), on injecte ledit fluide gazeux dans ladite zone aval (52) vers ladite zone amont (50) pour provoquer l'écoulement du fluide gazeux à contre-courant dudit écoulement gravitaire.

7. Procédé de séparation selon l'une quelconque des revendications 1 à 6, **caractérisé en ce qu'**à l'étape b), la valeur maximale des dimensions des particules dudit mélange est inférieure à 40 mm.

8. Procédé de séparation selon l'une quelconque des revendications 1 à 7, **caractérisé en ce qu'**à l'étape b), on provoque l'abaissement de la température des matériaux polymère.

9. Procédé de séparation selon la revendication 8, **caractérisé en ce qu'**à l'étape b), on injecte de l'azote liquide sur lesdits matériaux polymères pour abaisser leur température.

10. Procédé de séparation selon l'une quelconque des revendications 1 à 9, **caractérisé en ce qu'**à l'étape a) ledit second matériau polymère de la membrane filtrante est le Polyethersulfone et/ou le Polypropylène.

11. Procédé de séparation selon l'une quelconque des revendications 1 à 9, **caractérisé en ce qu'**à l'étape a) ledit second matériau polymère de la membrane filtrante est le Poly(fluorure de vinylidène).

## Patentansprüche

1. Verfahren zur Trennung von Polymermaterialien, umfassend folgende Schritte:
a) Bereitstellen einer Vielzahl von Flüssigfiltrationsmodulen, die jeweils ein Gerüst aus ersten Polymermaterialien und eine Filtermembran aus einem zweiten Polymermaterial mit einer porösen Struktur aufweisen;
b) Zerkleinern der Vielzahl von Flüssigfiltrationsmodulen, um eine Mischung von Partikeln aus Polymermaterialien mit einer vordefinierten Korngröße zu erhalten;
**dadurch gekennzeichnet, dass** es ferner folgende Schritte umfasst:
c) Bewirken des Schwerkraftflusses der Mischung aus Polymermaterialpartikeln zwischen einem vorgelagerten Bereich (50) und einem nachgelagerten Bereich (52), während ein Fluss eines gasförmigen Fluids gegen den Schwerkraftfluss bewirkt wird, um nur die Partikel des zweiten Polymermaterials in den vorgelagerten Bereich (50) führen zu können; und,
d) Rückgewinnen der Partikel des zweiten Polymermaterials in einem Rückgewinnungsbereich, der sich in Richtung des vorgelagerten Bereichs (50) befindet.

2. Trennverfahren nach Anspruch 1, **dadurch gekennzeichnet, dass** in Schritt b) die Partikel des zweiten Polymermaterials eine scheinbare Dichte von weniger als 0,4 g/cm³ aufweisen.

3. Trennverfahren nach Anspruch 1, **dadurch gekennzeichnet, dass** in Schritt b) die Partikel der ersten Polymermaterialien eine scheinbare Dichte von mehr als 0,6 g/cm³ aufweisen.

4. Trennverfahren nach einem der Ansprüche 1 bis 3, **dadurch gekennzeichnet, dass** in Schritt c) der Schwerkraftfluss der Mischung aus Polymermaterialpartikeln auf einem gewundenen Weg zwischen dem vorgelagerten Bereich (50) und dem nachgelagerten Bereich (52) geführt wird.

5. Trennverfahren nach einem der Ansprüche 1 bis 4, **dadurch gekennzeichnet, dass** in Schritt c) das gasförmige Fluid Luft ist.

6. Trennverfahren nach einem der Ansprüche 1 bis 5, **dadurch gekennzeichnet, dass** in Schritt c) das gasförmige Fluid in den nachgelagerten Bereich (52) in den vorgelagerten Bereich (50) eingespritzt wird, um den Fluss des gasförmigen Fluids gegen den Strom des Schwerkraftflusses zu bewirken.

7. Trennverfahren nach einem der Ansprüche 1 bis 6, **dadurch gekennzeichnet, dass** in Schritt b) der Maximalwert der Partikelgrößen der Mischung kleiner als 40 mm ist.

8. Trennverfahren nach einem der Ansprüche 1 bis 7, **dadurch gekennzeichnet, dass** in Schritt b) die Absenkung der Temperatur der Polymermaterialien bewirkt wird.

9. Trennverfahren nach Anspruch 8, **dadurch gekennzeichnet, dass** in Schritt b) flüssiger Stickstoff auf die Polymermaterialien eingespritzt wird, um deren Temperatur zu senken.

10. Trennverfahren nach einem der Ansprüche 1 bis 9, **dadurch gekennzeichnet, dass** in Schritt a) das zweite Polymermaterial der Filtermembran Polyethersulfon und/oder Polypropylen ist.

11. Trennverfahren nach einem der Ansprüche 1 bis 9, **dadurch gekennzeichnet, dass** in Schritt a) das zweite Polymermaterial der Filtermembran Poly(Vinylidenfluorid) ist.

## Claims

1. Method for separating polymer materials, comprising the following steps:
a) providing a plurality of liquid filtration modules each comprising a framework made of first polymer materials and a filter membrane made of a second polymer material having a porous structure;
b) shredding said plurality of liquid filtration modules to obtain a mixture of polymer material particles having a predefined particle size;
**characterised in that** it further comprises the following steps:
c) causing the gravity flow of the mixture of polymer material particles between an upstream zone (50) and a downstream zone (52), while causing the flow of a gaseous fluid against the flow of said gravity flow, so as to be able to drive only the particles of said second polymer material towards said upstream zone (50); and
d) the particles of said second polymer material are recovered in a recovery zone located towards said upstream zone (50).

2. Separation method according to claim 1, **characterised in that**, in step b), the particles of the second polymer material have an apparent density of less than 0.4 g/cm³.

3. Separation method according to claim 1, **characterised in that**, in step b), the particles of the first polymer materials have an apparent density greater than 0.6 g/cm³.

4. Separation method according to any one of claims 1 to 3, **characterised in that**, in step c), the gravity flow of said mixture of polymer material particles is guided along a winding path between said upstream zone (50) and said downstream zone (52).

5. Separation method according to any one of claims 1 to 4, **characterised in that**, in step c), the gaseous fluid is air.

6. Separation method according to any one of claims 1 to 5, **characterised in that**, in step c), said gaseous fluid is injected into said downstream zone (52) towards said upstream zone (50) to cause the flow of the gaseous fluid to flow against the flow of said gravity flow.

7. Separation method according to any one of claims 1 to 6, **characterised in that**, in step b), the maximum value of the dimensions of the particles of said mixture is less than 40 mm.

8. Separation method according to any one of claims 1 to 7, **characterised in that**, in step b), the temperature of the polymer materials is lowered.

9. Separation method according to claim 8, **characterised in that**, in step b), liquid nitrogen is injected onto said polymer materials to lower their temperature.

10. Separation method according to any one of claims 1 to 9, **characterised in that**, in step a), said second polymer material of the filter membrane is polyethersulfone and/or polypropylene.

11. Separation method according to any one of claims 1 to 9, **characterised in that**, in step a), said second polymer material of the filter membrane is poly(vinylidene fluoride).
